**Europäisches Patentamt**

**European Patent Office**

**Office européen des brevets**

(19)

(11) Veröffentlichungsnummer: **0 199 915 B1**

(12) # EUROPÄISCHE PATENTSCHRIFT

(45) Veröffentlichungstag der Patentschrift:
**10.01.90**

(51) Int. Cl.⁴: **B60G 3/20**

(21) Anmeldenummer: **86102104.6**

(22) Anmeldetag: **18.02.86**

(54) **Radaufhängung.**

(30) Priorität: **24.04.85 DE 3514788**

(43) Veröffentlichungstag der Anmeldung:
**10.12.86 Patentblatt 86/45**

(45) Bekanntmachung des Hinweises auf die Patenterteilung:
**10.01.90 Patentblatt 90/2**

(84) Benannte Vertragsstaaten:
**DE FR GB IT**

(56) Entgegenhaltungen:
**DE-A- 2 416 616
DE-A- 2 822 058
DE-A- 3 242 930
GB-A- 1 345 859**

(73) Patentinhaber: **Dr.Ing.h.c. F. Porsche
Aktiengesellschaft, Porschestrasse 42,
D-7000 Stuttgart 40(DE)**

(72) Erfinder: **Görich, Hans-Jürgen, Dipl.-Ing., Parkweg 11/1,
D-7126 Sersheim(DE)**

## Beschreibung

Die Erfindung bezieht sich auf eine Radaufhängung nach dem Oberbegriff des Anspruchs 1.

Bei Radaufhängungen für Kraftfahrzeuge ist es aus der DE-C 22 00 351 bekannt, den unteren Lenker am Radträger unter Zwischenschaltung von elastischen Elementen zu beiden Seiten der Raddrehachse anzulenken. Hierdurch wird zwischen den Lagern ein ideeller Radlenkpol gebildet, der - in bezug auf die Fahrtrichtung - hinter der Raddrehachse und außerhalb der Spurweite liegt, wodurch bei der Einwirkung von Umfangs- oder Seitenkräften auf das Rad eine Radstellungsänderung erreicht wird. Diese Anordnung des ideellen Radlenkpols ist bei der Verwendung einer in der Radschüssel angeordneten Bremsscheibe nur mit relativ großem Bauaufwand zu realisieren.

Ferner ist aus der DE-A 23 55 954 eine Radaufhängung bekannt geworden, bei der - in bezug auf die Fahrtrichtung - vor der Raddrehachse zwischen Radträger und Radführungsglied ein federelastisches Element vorgesehen ist. Hinter der Raddrehachse ist der Lenker um eine Lagerung am Radträger unter der Wirkung von Seitenkräften nur in Richtung Vorspur verdrehbar. Eine Führung des mit den Lenkern verbundenen Radträgers, derart, daß sowohl bei Seitenkräften als auch bei Bremskräften, eine bezüglich Fahrverhalten stabilisierend wirkende Vorspuränderung erzielt wird, läßt sich bei dieser bekannten Radaufhängung der vorgeschilderten Art nicht verwirklichen.

Ausgehend hiervon liegt der Erfindung die Aufgabe zugrunde, eine Radaufhängung so auszugestalten, daß sowohl bei Seitenkräften als auch bei Bremskräften sowie bei Anfahrkräften gezielte Radstellungsänderungen erzielt werden, welche die Fahrstabilität des Kraftfahrzeugs bei diesen Belastungszuständen unterstützen.

Diese Aufgabe wird erfindungsgemäß durch die kennzeichnenden Merkmale des Anspruchs 1 gelöst. Weitere vorteilhafte Ausbildungen beinhalten die Unteransprüche.

Die in den Ansprüchen gekennzeichneten Radaufhängungen bieten die Möglichkeit, das Rad unter der Wirkung von Brems-, Seiten- und Anfahrkräften so zu führen, daß eine definierte Radstellungsänderung erfolgt. Dies wird durch das Steuerlager möglich, welches ein federelastisches Element umfasst, das in Fahrzeugquerrichtung eine entsprechende Kennung aufweist. Denkbar wäre auch, im Rahmen der Erfindung eine in Abhängigkeit von den auftretenden Kräften entsprechende Ansteuerung des Lenkers und somit auch des Rades zur Verstellung.

Das Steuerlager ist so ausgelegt, daß beim Bremsen ein Verschwenken des Rades in Richtung Vorspur, beim Anfahren nicht in Richtung Nachspur und bei Seitenkraft in Richtung Vorspur ermöglicht wird. Bei der Verwendung des Steuerlagers in einer Doppelquerlenkerachse ergibt sich beim Ein- und Ausfedern eine Verlagerung des ideellen Radlenkpols in der Fahrbahnebene beim Einfedern nach außen und hinten und beim Ausfedern nach innen.

Hierdurch wird das wirksame Moment zur Radverstellung und damit die Größe der Verstellung entsprechend verändert.

Durch die anpassbare Anstellung der beiden unteren Lenker in der Weise zueinander, daß sich ein ideeller Radlenkpol außerhalb der Spurweite und hinter der Raddrehachse ergibt, wird im Gegensatz zur DE-C 22 00 351 die Möglichkeit geschaffen, daß in der Felgenschüssel noch eine Bremseinrichtung vorgesehen werden kann. Auch ermöglicht das eine Steuerlager während der Fahrt eine straffere Führung der Räder.

Ausführungsbeispiele der Erfindung sind in den Zeichnungen dargestellt und werden im folgenden näher beschrieben. Es zeigen

Fig. 1 eine schematische Seitenansicht eines Radführungslenkers mit Steuerlager und elastokinematischer Drehachse,

Fig. 2 eine Draufsicht zu Fig. 1,

Fig. 3 eine Draufsicht auf die beiden angestellten Lenkerarme des unteren Radführungsgliedes,

Fig. 4 eine Darstellung des unter der Wirkung von Brems- oder Seitenkräften verstellten Rades, gezeigt in gestrichelten Linien,

Fig. 5 eine weitere Ausführung eines Radführungslenkers mit einem zwischen dem Radträger und einem vorderen Lenkerarm angeordneten Steuerlager, und

Fig. 6 eine Darstellung des unteren Radführungsgliedes mit einem unter dem Einfluß von Brems- oder Seitenkräften verstellten Rades, gezeigt in ausgezogenen Linien.

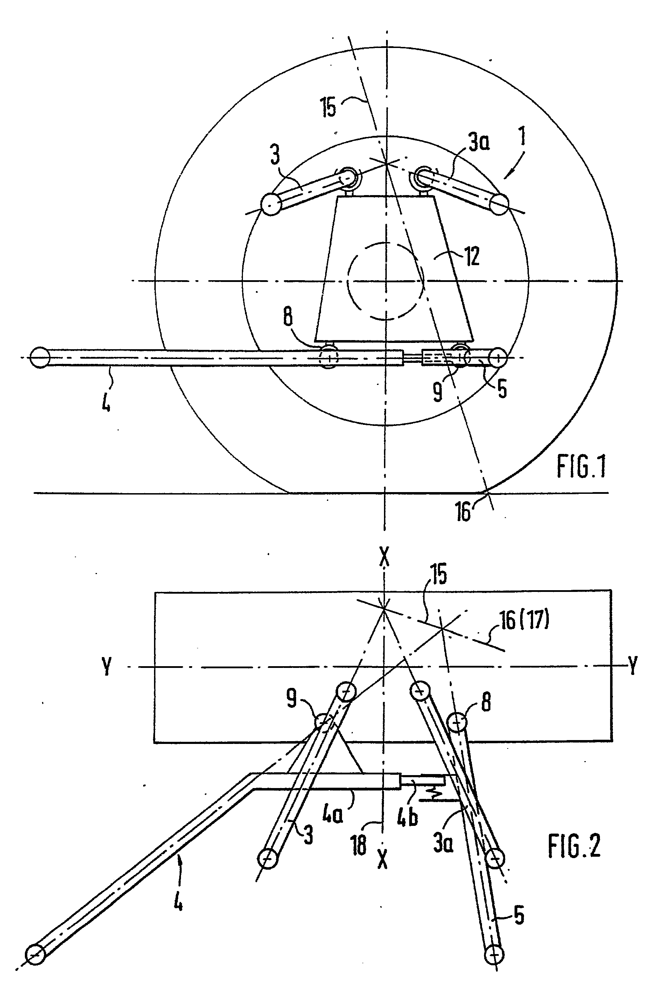

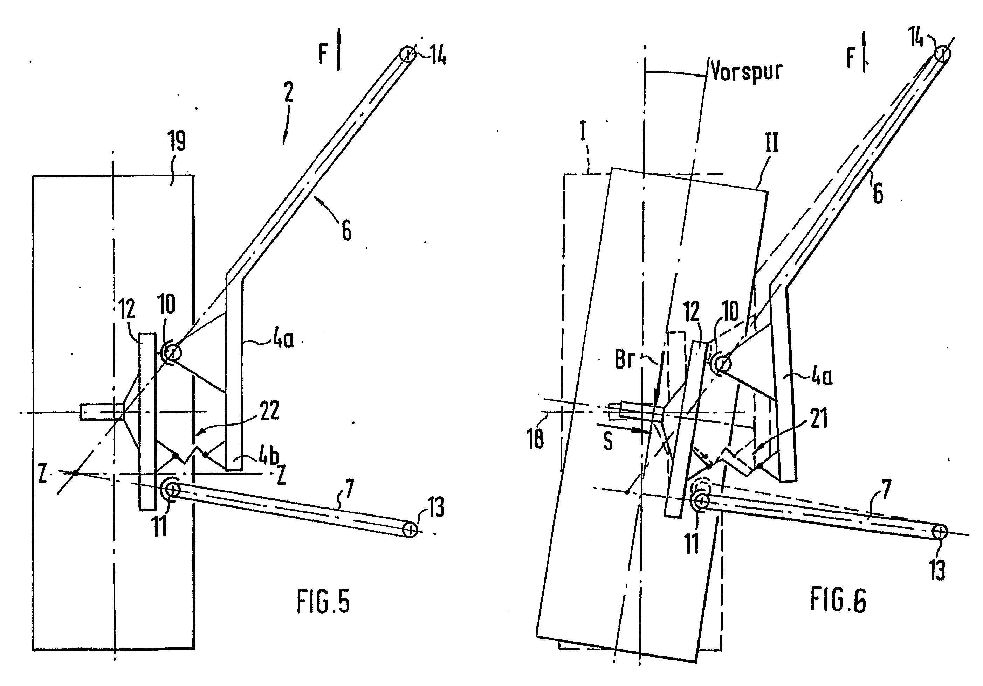

Die Radaufhängung 1; 2 umfasst obere Lenkerarme 3, 3a und untere Lenkerarme 4, 5; 6, 7, die einerseits über Gelenke 8, 9; 10, 11 am Radträger 12 und andererseits am Aufbau über weitere Gelenke 13, 14 angelenkt sind. Die Lenkerarme eines Lenkers erstrecken sich jeweils zu beiden Seiten einer senkrechten Radmittenquerebene X-X. Sie sind in der Weise zueinander angestellt, daß eine elastokinematische Drehachse 15 entsteht, die in der Ebene der Fahrbahn einen ideellen Radlenkpol 16; 17 bildet. Dieser Pol 16; 17 ist so angeordnet, daß er eine Lage - in bezug auf die Fahrtrichtung F - hinter der Raddrehachse 18 und außerhalb der Spurweite bzw. der durch das Rad 19 verlaufenden vertikalen Längsmittelebene Y-Y einnimmt. Der Radlenkpol 17 der Fig. 5, 6 ist in den Fig. 1 und 2 eingezeichnet.

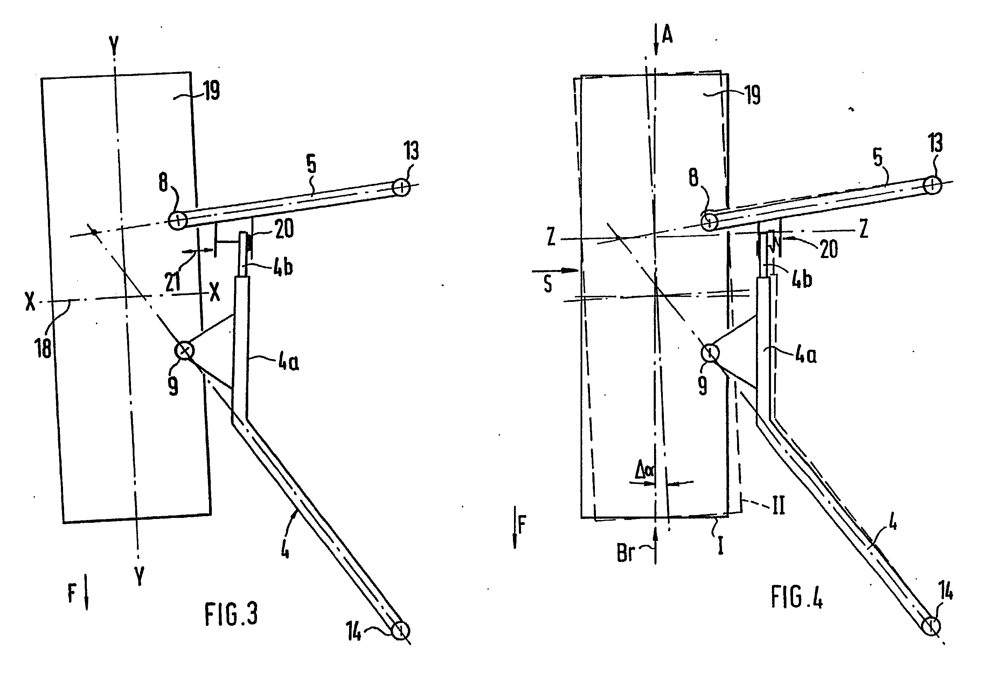

Gemäß der Fig. 1 bis 4 ist der - in bezug auf die Fahrtrichtung F - vornliegende Lenkerarm 4 der Radaufhängung 1 vor der Raddrehachse 18 im Gelenk 9 gelagert. Ein über dieses Gelenk 9 an den weiteren Lenkerarm 5 herangeführtes Armteil 4a ist mit seinem freien Ende 4b in einem Steuerlager 20 abgestützt. Dies weist in Fahrzeugquerrichtung 21 eine entsprechende Kennung auf, die eine Radverstellung in Richtung Vorspur unter der Einwirkung von Bremskräften Br, Seitenkräften S ermöglicht (Fig. 4), jedoch keine Nachspur unter Anfahrkräften A. Das Steuerlager 20 ist vorzugsweise - in bezug auf die Fahrtrichtung F - hinter der Raddrehachse 18 und in einem durch die Gelenke 8, 9, 13 und 14 gebildeten Koppelviereck angeordnet.

Wie Fig. 4 näher zeigt, wird durch die Bremskräfte Br und die Seitenkräfte S eine Verstellung des Rades 19 von der Position I in die Position II erzielt, wobei in der Position II das Rad 19 eine Vorspurstellung mit dem Winkel α einnimmt. Durch die Auslegung des Steuerlagers 20 in seiner Kennung wird das Eindrehen (Vorspur) des Rades 19 bestimmt.

Nach einer weiteren Ausführungsform der Erfindung gemäß der Fig. 5 und 6 ist bei der Radaufhängung 2 das Steuerlager 22 zwischen dem Radträger 12 und dem Lenkerarm 6 vorgesehen. Es ist mit dem freien Ende 4b des Lenkerarmteils 4a verbunden, so daß eine Schwenkbewegung des Lenkerarms 6 um das radträgerseitige Gelenk 10 möglich wird. Anhand der Fig. 6 ist zu erkennen, daß sich das Rad 19 unter der Wirkung von Bremskräften Br und Seitenkräften S von der Position I ebenfalls in die Position II in Richtung Vorspur verstellt. Auch dieses Steuerlager 22 liegt - in bezug auf die Fahrtrichtung F - hinter der Raddrehachse 18 und zwischen dem weiteren Lenker 7 und in dem durch die Gelenke 10, 11, 13, 14 gebildeten Koppelviereck.

## Patentansprüche

1. Radaufhängung für ein Kraftfahrzeug, insbesondere Hinterradaufhängung, bei der ein aus zwei oberen (3, 3a) und unteren (4,5) Lenkerarmen gebildeter Doppelquerlenker an einem Radträger angelenkt ist und eine elastokinematische Drehachse (15) mit einem ideellen Radlenkpol bildet, der - in bezug auf die Fahrtrichtung - hinter der Raddrehachse und außerhalb der Spurweite liegt und das Rad bei auf es einwirkenden Kräften verstellbar ist, dadurch gekennzeichnet, daß ein - in bezug auf die Fahrtrichtung F - vornliegender unterer Lenkerarm (4; 6) der Radaufhängung (1; 2) vor der Raddrehachse (18) am Radträger (12) in einem Gelenk (9; 10) gehalten ist und endseitig an einem hinter der Raddrehachse (18) angeordneten, in Fahrzeugquerrichtung nachgiebigen Steuerlager (20; 22) abgestützt ist.

2. Radaufhängung nach Anspruch 1, dadurch gekennzeichnet, daß das Steuerlager (20; 22) innerhalb eines von den Gelenken (8, 9, 13, 14; 10, 11, 13, 14) der beiden unteren Lenkerarme (4, 5; 6, 7) gebildeten Koppelvierecks liegt.

3. Radaufhängung nach den Ansprüchen 1 oder 2, dadurch gekennzeichnet, daß das Steuerlager (20) am hinter der Raddrehachse (18) angeordneten Lenkerarm (4) gehalten und mit dem weiteren Lenkerarm (5) unter Zwischenschaltung des Steuerlagers (20) federelastisch quer verstellbar verbunden ist.

4. Radaufhängung nach Anspruch 3, dadurch gekennzeichnet, daß der Lenkerarm (4) ein in Fahrzeuglängsrichtung verlaufendes Lenkerarmteil (4a) aufweist, das mit seinem freien Ende (4b) im Steuerlager (20) gehalten wird.

5. Radaufhängung nach Anspruch 1, dadurch gekennzeichnet, daß zwischen dem Lenkerarm (6) der Radaufhängung (2) und dem Radträger (12) das Steuerlager (22) mit einer federelastischen Quernachgiebigkeit vorgesehen ist, in dem das freie Ende (4b) des Lenkerarmes (6) abgestützt ist und der Lenkerarm (6) verschwenkbar um das radträgerseitige Gelenk (10) gehalten wird.

6. Radaufhängung nach einem oder mehreren der vorhergehenden Ansprüche, dadurch gekennzeichnet, daß das Steuerlager (20; 22) zwischen der Raddrehachse (18) und einer durch den ideellen Radlenkpol (16; 17) gelegten Querebene (Z-Z) angeordnet ist.

7. Radaufhängung nach Anspruch 6, dadurch gekennzeichnet, daß die radträgerseitigen Lager (10 und 11) sowie das elastische Lager (22) in einer gemeinsamen senkrechten Ebene liegen.

8. Radaufhängung nach Anspruch 6, dadurch gekennzeichnet, daß die Ebene - in Fahrtrichtung F gesehen - schräg zur Fahrzeuglängsmittenachse verläuft.

## Claims

1. A wheel suspension for a motor vehicle, in particular a rear-wheel suspension, in which a double transverse link formed by two upper guide arms (3, 3a) and lower guide arms (4, 5) is articulated on a wheel support and forms an elastokinematic rotation axis (15) with an ideal wheel steering pole which lies behind the wheel rotation axis — with respect to the direction of travel — and outside the wheel base, the wheel being adjustable in the event of forces acting upon it, characterized in that a lower guide arm (4; 6) of the wheel suspension (1; 2) lying in front — with respect to the direction of travel F — is held in front of the wheel rotation axis (18) in a joint (9; 10) on the wheel support (12) and is supported at the end on a control bearing (20, 22) which is arranged behind the wheel rotation axis (18) and which yields in the transverse direction of the vehicle.

2. A wheel suspension according to Claim 1, characterized in that the control bearing (20, 22) is situated inside a coupling quadrilateral formed by the joints (8, 9, 13, 14; 10, 11, 13, 14) of the two lower guide arms (4, 5; 6, 7).

3. A wheel suspension according to Claim 1 or 2, characterized in that the control bearing (20) is held on the guide arm (4) arranged behind the wheel rotation axis (18) and is connected transversely displaceably in a yielding manner to the further guide arm (5) with the interposition of the control bearing (20).

4. A wheel suspension according to Claim 3, characterized in that the guide arm (4) comprises a part (4a) which extends in the longitudinal direction of the vehicle and which is held by its free end (4b) in the control bearing (20).

5. A wheel suspension according to Claim 1, characterized in that the control bearing (22), in which the free end (4b) of the guide arm (4) is supported, is given a yielding transverse resilience between the guide arm (6) of the wheel suspension (2) and the wheel support (12), and the guide arm (6) is held so as to be pivotable about the joint (10) on the wheel support.

6. A wheel suspension according to one or more of the preceding Claims, characterized in that the control bearing (20; 22) is arranged between the wheel rotation axis (18) and a transverse plane (Z–Z) passing through the ideal wheel guide pole (16; 17).

7. A wheel suspension according to Claim 6, characterized in that the bearings (10 and 11) on the wheel support and the resilient bearing (22) lie in a common vertical plane.

8. A wheel suspension according to Claim 6, characterized in that the plane extends obliquely to the longitudinal median axis of the vehicle – as viewed in the direction of travel F.

**Revendications**

1. Suspension de roue pour véhicule automobile, notamment suspension de roue arrière, dans laquelle un système à doubles bras oscillants transversaux formé par deux bras oscillant supérieurs (3, 3a) et deux bras oscillants inférieurs (4, 5) est articulé à un support de roue et forme un axe de rotation élasto-cinématique (15) à pôle de braquage idéal qui – par rapport au sens de la marche – est situé à l'arrière de l'axe de rotation de la roue en dehors de l'écartement entre les roues, la roue pouvant être déplacée quand des forces agissent sur elle, caractérisée en ce qu'un bras oscillant inférieur (4; 6) de la suspension de roue (1; 2) qui est situé à l'avant – par rapport au sens de la marche F – est maintenu à l'avant de l'axe de rotation de la roue (18) sur le support de roue (12) par un point d'articulation (9; 10) et s'appuie par son extrémité sur un palier de commande (20; 22) disposé à l'arrière de l'axe de rotation (18) de la roue et pouvant céder en direction transversale du véhicule.

2. Suspension de roue selon la revendication 1, caractérisée en ce que le palier de commande (20; 22) est situé à l'intérieur d'un quadrilatère d'accouplement constitué par les paliers de commande (8, 9, 13, 14; 10, 11, 13, 14) des deux bras oscillants inférieurs (4, 5; 6, 7).

3. Suspension de roue selon la revendication 1 ou 2, caractérisée en ce que le palier de commande (20) fixé sur le bras oscillant (4) qui est à l'arrière de l'axe de rotation (18) de la roue et est relié de façon réglable dans le sens transversal et élastiquement à l'autre bras oscillant (5), avec interposition du palier de commande (20).

4. Suspension de roue selon la revendication 3, caractérisée en ce que le bras oscillant (4) comprend une partie de bras oscillant (4a) orientée en direction longitudinale du véhicule, qui est maintenue par son extrémité libre (4b) dans le palier de commande (20).

5. Suspension de roue selon la revendication 1, caractérisée en ce que le palier de commande (22) est prévu entre le bras oscillant (6) de la suspension de roue (2) et le support de roue (12), avec une capacité de flexion élastique transversale, dans lequel s'appuie l'extrémité libre (4b) du bras oscillant (6), et le bras oscillant (6) est maintenu de façon pivotante autour du point d'articulation (10) prévu sur le côté du support de roue.

6. Suspension de roue selon une ou plusieurs des revendications précédentes, caractérisée en ce que le palier de commande (20; 22) est disposé entre l'axe de rotation (18) de la roue et un plan transversal (Z–Z) passant par le pôle de braquage idéal (16; 17).

7. Suspension de roue selon la revendication 6, caractérisée en ce que les paliers (10 et 11) montés sur le support de roue ainsi que le palier élastique (22) sont situés dans un plan perpendiculaire commun.

8. Suspension de roue selon la revendication 6, caractérisée en ce que le plan – vu dans le sens de la marche F – est en oblique par rapport à l'axe longitudinal médian du véhicule.

FIG.1

FIG.2

FIG.3

FIG.4

EP 0 199 915 B1

FIG.5

FIG.6